# EUROPÄISCHE PATENTSCHRIFT

(11) **EP 0 557 941 B1**
(45) Veröffentlichungstag und Bekanntmachung des Hinweises auf die Patenterteilung: **14.01.1998**
(21) Anmeldenummer: 93102800.5
(22) Anmeldetag: 23.02.1993
(51) Int. Cl.: G01V 1/00, A24C 5/00, A24B 1/04, A24C 5/39

(54) **Verfahren und Anordnung zum Erfassen von Fremdkörpern in Tabakfasern**
Method and arrangement for detecting foreign objects in tobacco fibres
Procédé et dispositif pour détecter des corps étrangers dans des fibres tabac

(30) Priorität: 25.02.1992 DE 4205707
(43) Veröffentlichungstag der Anmeldung: 01.09.1993
(73) Patentinhaber: Hauni Maschinenbau Aktiengesellschaft, 21033 Hamburg (DE)
(72) Erfinder: Heitmann, Uwe, W-2050 Hamburg 80 (DE)

(56) Entgegenhaltungen:
- GB-A- 2 096 445
- US-A- 4 294 062
- US-A- 4 651 758
- US-A- 4 869 273

## Beschreibung

Die Erfindung betrifft ein Verfahren zum Erfassen von Fremdkörpern in Tabakfasern, aus denen ein Tabakmengenstrom in einem Verteiler einer Zigarettenstrangmaschine gebildet und Fremdkörper mittels eines Sensors erkannt werden.

Die Erfindung betrifft außerdem eine Anordnung zum Erfassen von Fremdkörpern in Tabakfasern in einem Verteiler einer Zigarettenstrangmaschine mit einer Vorrichtung zum Bilden eines Tabakmengenstromes und mit einem beim Auftreten von Fremdkörpern ansprechenden Sensor.

Bei der Verarbeitung von Tabak, insbesondere Tabakfasern, können im Tabak befindliche relativ harte Fremdkörper wie Steine, Metallteile, Holzstücke oder dergleichen erhebliche Störungen verursachen. So werden z. B. in Zigarettenstrangmaschinen mit Walzen, die mit Nadeln, Stacheln oder dgl. besetzt sind, durch die vorerwähnten Fremdkörper leicht Nadeln oder dgl. abgebrochen, was die Funktion der Walzen so stört, daß sie eine neue Belegung mit Nadeln, Stacheln oder dgl. erhalten müssen. Dies ist teuer und zeitaufwendig, weil die entsprechenden Walzen ausgebaut und - zumindest teilweise - neu mit Nadeln besetzt werden müssen. Während dieser Zeit ist die Maschine außer Funktion.

In der US-A -4 294 062 und der GB-A -2 096 445 sind Überwachungsvorrichtungen für Erntemaschinen beschrieben, bei denen Steine im Erntegut in zugeordneten Körperschallsensoren akustisch Störsignale auslösen. In der US-A-4 869 273 ist eine Überwachungsvorrichtung für einen Verteiler einer Zigarettenstrangmaschine beschrieben, die verhindern soll, daß zwischen Tabakfasern befindliche Fremdkörper, wie Stofflappen, Störungen verursachen. Hierzu ist eine drehende Paddelwalze als Sensor ausgebildet. Sinkt die Drehzahl der Walze infolge der Erfassung eines Fremdkörpers, so wird daraus ein Signal abgeleitet, das die Antriebe abschaltet.

Die der Erfindung zugrundeliegende Aufgabe besteht darin, Fremdkörper der vorerwähnten Art in Tabakfasern zu erfassen.

Gemäß der Erfindung wird die Aufgabe dadurch gelöst, daß die Tabakfasern mit den in ihnen enthaltenen relativ harten Fremdkörpern wie Steine oder Metallteile auf eine Fläche gefördert oder geleitet werden, die mit dem Sensor, der beim Auftreten eines für Fremdkörper charakteristischen Schwingungswertes, d. h. Körperschall, ein Signal abgibt, in Verbindung steht.

Weiterbildungen des Vefahrens gemäß der Erfindung sind den abhängigen Verfahrensansprüchen zu entnehmen.

Die eingangs erwähnte Anordnung ist gekennzeichnet durch eine im Verteiler angeordnete Förder- oder Leitvorrichtung zum Fördern bzw. Leiten des Mengenstromes auf eine Fläche, die mit dem Sensor in Verbindung steht, der beim Auftreffen eines für relativ harte Fremdkörper wie Steine oder Metallteile charakteristischen Schwingungswertes ein Signal abgibt.

Weiterbildungen der Anordnung gemäß der Erfindung sind den abhängigen Anordnungsansprüchen zu entnehmen.

Die mit der Erfindung verbundenen Vorteile bestehen darin, daß in den Tabakfasern enthaltene Fremdkörper, insbesondere aus nicht ferromagnetischem Material, die sehr schwer zu erfassen und auszuschleusen sind, zuverlässig in Tabakmengenströmen festgestellt und gegebenenfalls automatisch entfernt werden können, bevor sie Schaden anrichten.

Die Erfindung wird anhand eines Ausführungsbeispieles näher erläutert.

Es zeigen:
- Figur 1: einen Teil einer Zigarettenstrangmaschine zum Entnehmen von Tabakfasern aus einem Vorrat,
- Figur 2: den zeitlichen Verlauf von Schwingungssignalen, die von Tabakfasern und einem Fremdkörper herrühren.

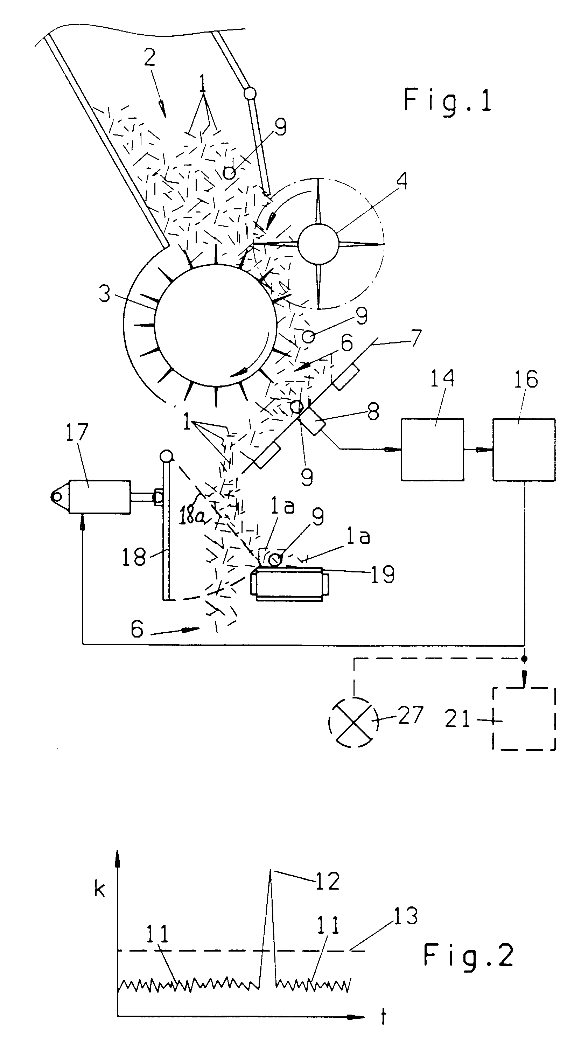

In Figur 1 ist ein Teil des Verteilers einer sonst nicht gezeigten Zigarettenstrangmaschine dargestellt, von der weitere Einzelheiten z. B. in der US-PS 4 869 273 beschrieben sind. Das Gut in Form von Tabakfasern 1 befindet sich in einem Vorrat 2, aus dem eine Austragvorrichtung, bestehend aus zwei angetriebenen Stiftwalzen 3 und 4, vereinzelte Fasern 1 in einem Mengenstrom 6 austrägt und ihn zu einer Fläche 7 fördert. An dieser Fläche 7 ist ein Sensor 8 zum Erfassen von Schwingungen (Körperschall) befestigt, der entsprechende elektrische Signale abgibt.
Figur 2 zeigt bei 11 von dem Sensor abgegebene Signale K für den Körperschall über der Zeit t, sofern nur Tabakfasern von den Walzen 3 und 4 gegen die Fläche 7 gefördert werden. Wird einer der im Tabak 1 befindlichen Fremdkörper 9, z. B. ein Stein, eine Schraube, ein Holzstück oder dgl., gegen die Fläche 7 gefördert, so steigt das Ausgangssignal des Sensors 8 entsprechend 12 an. Überschreitet es einen vorgegebenen Schwellenwert 13, so gibt ein dem Sensor 8 nachgeschaltetes Schwellenwertglied 14 ein Ausgangssignal an einen Verstärker 16, der ein elektrisches Betätigungssignal an einen Stellentrieb, z. B. einen Elektromagneten 17, abgibt. Der Elektromagnet schwenkt dann - evtl. nach einer der Laufzeit des Mengenstromes 6 mit dem Fremdkörper 9 entsprechenden Verzögerungszeit - eine Ablenkplatte 18 aus ihrer Ruhelage in eine gestrichelt angedeutete Ablenklage 18a, in der sie den Fremdkörper 9, der das Betätigungssignal ausgelöst hat, zusammen mit den ihn umgebenden Tabakfasern 1a auf ein Abförderband 19 leitet. Der Fremdkörper 9 kann dann aus dem ihn umgebenden Tabak 1a entfernt und letzterer wieder in die Maschine zurückgegeben werden.

Anstatt den Fremdkörper 9 mit einer automatischen Ableitung aus dem Mengenstrom 6 auszuschleusen, kann der Antrieb der Maschine über einen strichliert dargestellten von dem Ausgangssignal des Verstärkers 16 betätigten Schalter 21 abgeschaltet werden, wobei gleichzeitig eine Anzeige 27, z. B. eine Blinklampe, aktiviert werden kann. Der Maschinenbediener kann dann den Fremdkörper in dem Bereich des Sensors suchen und entfernen.

## Patentansprüche

1. Verfahren zum Erfassen von Fremdkörpern in Tabakfasern, aus denen ein Tabakmengenstrom in einem Verteiler einer Zigarettenstrangmaschine gebildet und Fremdkörper mittels eines Sensors erkannt werden, dadurch gekennzeichnet, daß die Tabakfasern mit den in ihnen enthaltenen relativ harten Fremdkörpern wie Steine oder Metallteile auf eine Fläche gefördert oder geleitet werden, die mit dem Sensor, der beim Auftreten eines für Fremdkörper charakteristischen Schwingungswertes, d.h. Körperschall, ein Signal abgibt, in Verbindung steht.

2. Verfahren nach Anspruch 1, dadurch gekennzeichnet, daß der Sensor ein elektrisches Signal abgibt, wenn das Körperschallsignal einen vorgegebenen Grenzwert übersteigt.

3. Verfahren nach Anspruch 1 und/oder 2, dadurch gekennzeichnet, daß ein kontinuierlicher Mengenstrom von Tabakfasern auf die Fläche gefördert oder geleitet wird.

4. Verfahren nach irgendeinem der vorhergehenden Ansprüche, dadurch gekennzeichnet, daß das Sensorsignal das Entfernen einer einen Fremdkörper enthaltenden Teilmenge des Mengenstromes steuert.

5. Verfahren nach irgendeinem der Ansprüche 1 bis 3, dadurch gekennzeichnet, daß das Sensorsignal den Mengenstrom aus Tabakfasern stillsetzt.

6. Anordnung zum Erfassen von Fremdkörpern (9) in Tabakfasern (1) in einem Verteiler einer Zigarettenstrangmaschine mit einer Vorrichtung (3, 4) zum Bilden eines Tabakmengenstromes (6) und mit einem beim Auftreten von Fremdkörpern ansprechenden Sensor (8), gekennzeichnet durch eine im Verteiler angeordnete Förder- oder Leitvorrichtung (3, 4) zum Fördern bzw. Leiten des Mengenstromes auf eine Fläche (7), die mit dem Sensor in Verbindung steht, der beim Auftreffen eines für relativ harte Fremdkörper wie Steine oder Metallteile charakteristischen Schwingungswertes (12) ein Signal abgibt.

7. Anordnung nach Anspruch 6, gekennzeichnet durch ein von dem Ausgangssignal des Sensors (8) beaufschlagtes Schwellenwertglied (14), das ein Signal abgibt, wenn der von einem Fremdkörper (9) ausgelöste vom Sensor erfaßte und in ein elektrisches Signal umgesetzte charakteristische Schwingungswert, d.h. Körperschall, (12) einen vorgegebenen Grenzwert (13) übersteigt.

8. Anordnung nach Anspruch 6 und/oder 7, gekennzeichnet durch eine Förder- oder Leitvorrichtung (3, 4) für einen kontinuierlichen Mengenstrom (6) von Tabakfasern (1) zu der Fläche (7).

9. Anordnung nach irgendeinem der Ansprüche 6 bis 8, gekennzeichnet durch eine Ableitvorrichtung (17, 18) zum Entfernen einer den Fremdkörper (9) enthaltenden Teilmenge (1a) des stückigen Gutes.

10. Anordnung nach irgendeinem der Ansprüche 6 bis 8, gekennzeichnet durch eine Schaltvorrichtung (21) zum Stillsetzen des einen Fremdkörper (9) enthaltenden Mengenstromes (6).

## Claims

1. Method for detecting foreign bodies in tobacco fibres, from which a mass flow of tobacco is formed in a distributor of a cigarette rod-making machine and foreign bodies are detected by means of a sensor, characterised in that the tobacco fibres are conveyed or directed, together with the relatively hard foreign bodies contained in them, such as stones or metal parts, onto a surface which is connected to the sensor, the sensor emitting a signal upon the occurrence of a vibration value, i.e. structure-borne noise, characteristic of foreign bodies.

2. Method according to Claim 1, characterised in that the sensor emits an electrical signal when the structure-borne noise signal exceeds a preset limit value.

3. Method according to Claim 1 and/or 2, characterised in that a continuous mass flow of tobacco fibres is conveyed or directed onto the surface.

4. Method according to any of the preceding claims, characterised in that the sensor signal controls the removal of a partial quantity of the mass flow containing a foreign body.

5. Method according to any of Claims 1 to 3, characterised in that the sensor signal stops the mass flow of tobacco fibres.

6. Arrangement for detecting foreign bodies (9) in tobacco fibres (1) in a distributor of a cigarette rod-making machine, having a device (3, 4) for forming a mass flow (6) of tobacco and having a sensor (8) which responds upon the occurrence of foreign bodies, characterised by a conveying or directing device (3, 4) arranged in the distributor and intended for conveying or, respectively, directing the mass flow onto a surface (7) which is connected to the sensor, the sensor emitting a signal upon the incidence of a vibration value (12) characteristic of relatively hard foreign bodies, such as stones or metal parts.

7. Arrangement according to Claim 6, characterised by a threshold element (14) which is supplied with the output signal of the sensor (8) and emits a signal when the characteristic vibration value, i.e. structure-borne noise, (12) which is triggered by a foreign body (9), detected by the sensor and converted into an electrical signal exceeds a preset limit value (13).

8. Arrangement according to Claim 6 and/or 7, characterised by a conveying or directing device (3, 4) for a continuous mass flow (6) of tobacco fibres (1) to the surface (7).

9. Arrangement according to any of Claims 6 to 8, characterised by a diverting device (17, 18) for removing a partial quantity (la) of the fragmentary material containing the foreign body (9).

10. Arrangement according to any of Claims 6 to 8, characterised by a switching device (21) for stopping the mass flow (6) containing a foreign body (9).

## Revendications

1. Procédé pour détecter des corps étrangers dans des fibres de tabac, à partir desquelles un courant massique de tabac est formé dans un distributeur d'une machine à former des boudins de cigarettes et des corps étrangers sont identifiés à l'aide d'un capteur, caractérisé en ce que les fibres de tabac ainsi que les corps étrangers relativement durs, quelles contiennent, par exemple des pierres ou des pièces métalliques, sont convoyés ou dirigés en direction d'une surface, qui est reliée au capteur qui délivre un signal dans le cas de l'apparition d'une valeur d'oscillation caractéristique de corps étrangers, à savoir un son transmis par le corps.

2. Procédé selon la revendication 1, caractérisé en ce que le capteur délivre un signal électrique lorsque le signal formé du son transmis par le corps dépasse une valeur limite prédéterminée.

3. Procédé selon la revendication 1 et/ou 2, caractérisé en ce qu'un courant continu de fibres de tabac est convoyé ou dirigé en direction de la surface.

4. Procédé selon l'une quelconque des revendications précédentes, caractérisé en ce que le signal du capteur commande l'élimination d'une partie, qui contient un corps étranger, du courant massique.

5. Procédé selon l'une quelconque des revendications 1 à 3, caractérisé en ce que le signal du capteur arrête le courant massique formé des fibres de tabac.

6. Dispositif pour détecter des corps étrangers (9) dans des fibres de tabac (1) dans un distributeur d'une machine à fabriquer des boudins de cigarettes comportant un dispositif (3, 4) pour former un courant massique de tabac (6) et un capteur (8) qui répond à l'apparition de corps étrangers, caractérisé par un dispositif de convoyage ou de guidage (3, 4) disposé dans le distributeur et servant à convoyer ou guider le courant massique en direction d'une surface (7), qui est reliée au capteur, lequel délivre un signal lors de l'apparition d'une valeur d'oscillation (12) qui est caractéristique de corps étrangers relativement durs tels que des pierres ou des pièces métalliques.

7. Dispositif selon la revendication 6, caractérisé par un circuit à valeur de seuil (14), qui est chargé par le signal de sortie du capteur (8) et délivre un signal lorsque la valeur d'oscillation caractéristique (12), déclenchée par un corps étranger (9), détectée par le capteur et convertie en un signal électrique, c'est-à-dire un son transmis par le corps, dépasse une valeur limite prédéterminée (13).

8. Dispositif selon la revendication 8 et/ou 7, caractérisé par un dispositif d'entraînement ou de guidage (3, 4) pour guider un courant massique continu (6) de fibres de tabac (1) en direction de la surface (7).

9. Dispositif selon l'une quelconque des revendications 6 à 8, caractérisé par un dispositif de dérivation (17, 18) pour retirer une partie (la) contenant le corps étranger (9), du matériau en pièces.

10. Dispositif selon l'une quelconque des revendications 6 à 8, caractérisé par un dispositif de commutation (21) servant à arrêter le courant de matière (6) contenant un corps étranger (9).
